# EUROPEAN PATENT APPLICATION

(11) **EP 4 832 563 A1**
(43) Date of publication of application: **28.10.2026**
(21) Application number: 24906486.6
(22) Date of filing: 19.12.2024
(51) Int. Cl.: H04W 24/10

(54) **COMMUNICATION METHOD, APPARATUS, ELECTRONIC DEVICE, AND STORAGE MEDIUM**

(30) Priority: 22.12.2023 CN 202311790694
(71) Applicant: Spreadtrum Communications (Shanghai) Co., Ltd., Shanghai 201203 (CN)
(72) Inventor: LIU, Xing, Shanghai 201203 (CN)
(74) Representative: Patentanwälte Ruff, Wilhelm, Beier, Dauster & Partner mbB
(86) International application number: PCT/CN2024/140777
(87) International publication number: WO 2025/131011

(57) **Abstract**

The present application relates to the technical field of communications. Provided are a communication method, an apparatus, an electronic device, and a storage medium. The method comprises: receiving measurement control information, the measurement control information comprising first instruction information, and the first instruction information being used for instructing a terminal device to incorporate first timing advance information of candidate neighbor cells in a measurement report; and sending a measurement report, the measurement report comprising M pieces of first timing advance information, and each piece of first timing advance information corresponding to one candidate neighbor cell, where M is a positive integer. In the solution, a terminal device sends a measurement report before handover execution or secondary node addition, so that a base station can perform base station scheduling according to timing advance information in the measurement report during a first uplink transmission after the handover or the secondary node addition, thereby improving scheduling efficiency and reducing communication time delay.

## Description

The present application claims priority to a CN Patent Application No. 202311790694.9, entitled as "COMMUNICATION METHOD, APPARATUS, ELECTRONIC DEVICE, AND STORAGE MEDIUM", filed with the China National Intellectual Property Administration on December 22, 2023, the entirety of which is incorporated herein by reference.

### TECHNICAL FIELD

The present application relates to communication technology field, and particularly to a communication method, an apparatus, an electronic device, and a storage medium.

### BACKGROUND

In related technologies, transmission of timing advance information is achieved between a user terminal and a target base station through information exchange, which includes information MSG1, MSG2, MSG3, and MSG4 in sequence. The timing advance information in carried in MSG3. The target base station obtains the timing advance information of the user terminal in MSG3, resulting in a problem of high communication delay.

### SUMMARY

The present application provides a communication method, an apparatus, an electronic device, and a storage medium for reducing communication delay.

In a first aspect, the present application provides a communication method comprising: receiving measurement control information, the measurement control information comprising first indication information for indicating to a terminal device to include first timing advance information of candidate neighbor cells in a measurement report; sending the measurement report, the measurement report including a number M of first timing advance information, each first timing advance information corresponding to one candidate neighbor cell and M being a positive integer.

In one implementation, the measurement control information is from a master node MN in dual connectivity DC.

In one implementation, the sending the measurement report includes: sending the measurement report via terminal device assistance information UAI.

In one implementation, the first timing advance information includes at least one of the following parameters: a difference in service link propagation delay between a serving cell of the terminal device and the candidate neighbor cell of the terminal device, or timing advance TA of the terminal device in the candidate neighbor cell.

In a second aspect, the present application provides a communication method comprising: sending measurement control information, the measurement control information comprising first indication information for indicating to a terminal device to include first timing advance information of candidate neighbor cells in a measurement report; receiving the measurement report, the measurement report including the first timing advance information of at least a part of the candidate neighbor cells.

In one implementation, the first timing advance information includes at least one of the following parameters: a difference in service link propagation delay between a serving cell of the terminal device and the candidate neighbor cell of the terminal device, or timing advance TA of the terminal device in the candidate neighbor cell.

In one implementation, the method further comprises sending second timing advance information.

In one implementation, the second timing advance information is carried by a request message for secondary node SN addition in dual connectivity DC.

In one implementation, the sending second timing advance information includes sending at least one of the following parameters: a difference in service link propagation delay between a serving cell of the terminal device and a target cell of the terminal device, timing advance TA of the terminal device in the serving cell, or timing advance TA of the terminal device in the target cell.

In one implementation, the target cell of the terminal device is a cell in a secondary node SN in dual connectivity DC.

In a third aspect, the present application provides a communication method, comprising: receiving second timing advance information; determining timing advance TA of a terminal device in a target cell according to the second timing advance information.

In one implementation, the second timing advance information includes at least one of the following parameters: a difference in service link propagation delay between a serving cell of the terminal device and the target cell of the terminal device, timing advance TA of the terminal device in the serving cell, or timing advance TA of the terminal device in the target cell.

In one implementation, the target cell is a cell in a secondary node SN in dual connectivity DC.

In a fourth aspect, the present application provides a communication apparatus, comprising: a first receiving module for receiving measurement control information, the measurement control information comprising first indication information for indicating to a terminal device to include first timing advance information of candidate neighbor cells in a measurement report; a first sending module for sending the measurement report, the measurement report including a number M of first timing advance information, each first timing advance information corresponding to one candidate neighbor cell and M being a positive integer.

In one implementation, the measurement control information is from a master node MN in dual connectivity DC.

In one implementation, the first sending module is configured for sending the measurement report via terminal device assistance information UAI.

In one implementation, the first timing advance information includes at least one of the following parameters: a difference in service link propagation delay between a serving cell of the terminal device and the candidate neighbor cell of the terminal device, or timing advance TA of the terminal device in the candidate neighbor cell.In a fifth aspect, the present application provides a communication apparatus, comprising: a second sending module for sending measurement control information, the measurement control information comprising first indication information for indicating to a terminal device to include first timing advance information of candidate neighbor cells in a measurement report; a second receiving module for receiving the measurement report, the measurement report including the first timing advance information of at least a part of the candidate neighbor cells.

In one implementation, the first timing advance information includes ata least one of the following parameters: a difference in service link propagation delay between a serving cell of the terminal device and the candidate neighbor cell of the terminal device, or timing advance TA of the terminal device in the candidate neighbor cell.

In one implementation, the apparatus further comprises a processing module for sending second timing advance information.

In one implementation, the second timing advance information is carried by a request message for secondary node SN addition in dual connectivity DC.

In one implementation, the processing module is specifically configured for sending at least one of the following parameters: a difference in service link propagation delay between a serving cell of the terminal device and a target cell of the terminal device, timing advance TA of the terminal device in the serving cell, or timing advance TA of the terminal device in the target cell.

In one implementation, the target cell of the terminal device is a cell in a secondary node SN in dual connectivity DC.

In a sixth aspect, the present application provides a communication apparatus, comprising: a third receiving module for receiving second timing advance information; a determining module for determining timing advance TA of a terminal device in a target cell according to the second timing advance information.

In one implementation, the second timing advance information includes at least one of the following parameters: a difference in service link propagation delay between a serving cell of the terminal device and the target cell of the terminal device, timing advance TA of the terminal device in the serving cell, or timing advance TA of the terminal device in the target cell.

In one implementation, the target cell is a cell in a secondary node SN in dual connectivity DC.

In a seventh aspect, the present application provides an electronic device comprising: a processor, and a memory communicatively connected with the processor; the memory storing computer-executable instructions and the computer-executable instructions stored in the memory, when executed by the processor, implementing any one of the methods described in the first aspect.

In an eighth aspect, the present application provides a computer-readable storage medium storing computer-executable instructions, which are executed by a processor to perform any one of the methods described in the first aspect.

In a ninth aspect, the present application provides a computer program product, comprising a computer program executed by a processor to perform any one of the methods described in the first aspect.

The present application provides a communication method, an apparatus, an electronic device and a storage medium. The communication method comprises: receiving measurement control information, the measurement control information comprising first indication information for indicating to a terminal device to include first timing advance information of candidate neighbor cells in a measurement report; sending the measurement report, the measurement report including a number M of first timing advance information, each first timing advance information corresponding to one candidate neighbor cell and M being a positive integer. In the above solution, the measurement report is sent by the terminal device before base station switching or secondary node addition, and a base station can perform base station scheduling at the time of a first uplink transmission after base station switching or secondary node addition according to the timing advance information in the measurement report, so that scheduling efficiency is improved and communication delay is reduced.

### BRIEF DESCRIPTION OF THE DRAWINGS

The accompanying drawings are incorporated into the specification and form a part of the specification, illustrating embodiments in accordance with the present application and used together with the specification to explain the principles of the present application.
FIG. 1 is a schematic diagram of an application scenario of a communication method provided by an embodiment of the present application;
FIG. 2 is a schematic flowchart of a communication method provided by an embodiment of the present application;
FIG. 3 is a schematic diagram of a communication method at terminal device side provided by an embodiment of the present application;
FIG. 4 is a schematic flowchart of a communication method provided by an embodiment of the present application;
FIG. 5 is a schematic diagram of a communication method at base station side provided by an embodiment of the present application;
FIG. 6 is a schematic diagram of sending second timing advance information provided by an embodiment of the present application;
FIG. 7 is a schematic flowchart of a communication method provided by an embodiment of the present application;
FIG. 8 is a schematic structural diagram of a communication apparatus provided by an embodiment of the present application;
FIG. 9 is a schematic structural diagram of a communication apparatus provided by an embodiment of the present application;
FIG. 10 is a schematic structural diagram of a communication apparatus provided by an embodiment of the present application;
FIG. 11 is a schematic structural diagram of an electronic device provided by an embodiment of the present application.

Through the above figures, the specific embodiments of the present application have been shown, and more detailed descriptions will be provided in the following text. These figures and textual descriptions are not intended to limit the scope of the present application in any way, but rather to illustrate the concept of the present application for those skilled in the art by referring to specific embodiments.

### DETAILED DESCRIPTION

In order to clarify the purpose, technical solution, and advantages of embodiments of the present application, a clear and complete description of the technical solution in the embodiments of the present application is provided below in conjunction with the accompanying figures. Obviously, the described embodiments are a part of the embodiments of the present application, not all of them. All other embodiments obtained by a person of ordinary skill in the art based on the embodiments of the present application without creative efforts shall fall within the protection scope of the present application.

The term "and/or" in the embodiments of the present application describes a relationship between related objects, indicating that three types of relationships may exist. For example, A and/or B may indicate: A alone, both A and B, or B alone. The character "/" indicates an "or" relation between the two objects before and after the character.

It should be understood that although the terms "first", "second", etc. may be used in the present application to describe various objects, these objects should not be limited to these terms. These terms are only used to distinguish objects of the same type from each other. For example, usage of terms such as a first detection pin and a second detection pin is only to distinguish between different detection pins, and does not indicate differences in priority or importance between these two detection pins. Optionally, the first detection pin may also be referred to as the second detection pin, and similarly, the second detection pin may also be referred to as the first detection pin, without departing from the scope of the present application.

It should be further understood that the terms "including" and "comprising" indicate the existence of the aforementioned features, steps, operations, elements, components, types, and/or groups, but do not exclude the existence, appearance, or addition of one or at least one other feature, step, operation, element, component, type, and/or group.

In the present application, "exemplary", "in some embodiments", "in some other embodiments", etc. are used to indicate as examples, illustrations, or explanations. Any embodiments or design schemes described as "examples" in the present application should not be interpreted as being more preferred or advantageous than other embodiments or design schemes. Specifically, the use of the term "example" intends to present concepts in a concrete way.

It should be understood that although various steps in flowcharts of the embodiments of the present application are displayed in sequence as indicated by arrows, these steps are not necessarily executed in the sequence indicated by the arrows. Unless otherwise specified in this disclosure, there is no strict limit on the order for execution of these steps, and these steps can be executed in other orders. Moreover, at least a portion of the steps in the figures may include at least one sub-step or at least one stage, which may not necessarily be completed at the same time, but may be executed at different times, and their execution order may not necessarily be sequential, but may alternate or rotate with at least a portion of other steps or sub-steps or stages of other steps.

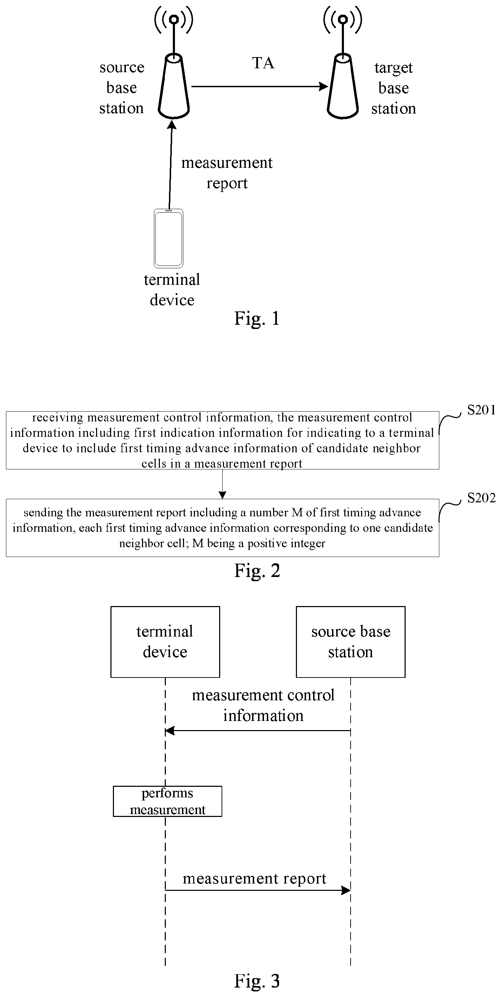

FIG. 1 is a schematic diagram of an application scenario of a communication method provided by an embodiment of the present application. An example is provided in connection with the scenario shown in the diagram. A terminal device sends a measurement report to a source base station, and the source base station determines timing advance TA based on the measurement report. The source base station sends the TA to a target base station to enable base station switching or dual connectivity.

The technical solution of the embodiments of the present application can be applied to various communication systems, such as Long Term Evolution (LTE) systems, LTE Frequency Division Duplex (FDD) systems, LTE Time Division Duplex (TDD) system, Universal Mobile Telecommunications System (UMTS), Worldwide Interoperability for Microwave Access (WiMAX) communication systems, 5th Generation (5G) systems or new radio (NR), wireless local area network communication systems specified by 802.11b, and future possible new systems.

The terminal device in the embodiments of the present application may also be referred to as: a user equipment (UE), a mobile station (MS), a mobile terminal (MT), an access terminal, a user unit, a user station, a mobile station, a mobile platform, a remote station, a remote terminal, a mobile device, a user terminal, a terminal, a wireless communication device, a user agent or a user apparatus, etc.

The terminal device can be a device that provides voice/data connectivity to users, such as a handheld device, an in-car device, and the like with wireless connectivity. At present, some examples of the terminal device include a mobile phone, a tablet, a laptop, a palmtop, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation security, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device with wireless communication capability, a computing device or another processing device connected to a wireless modem, an in-vehicle device, a wearable device, a terminal device in a 5G network or a future evolved public land mobile network (PLMN), etc, which is not limited in the present application.

As an example and not a limitation, in the present application, a terminal device may be a terminal device in an Internet of Things (IoT) system. The Internet of Things is an important component of the future development of information technology, and its main technical feature is to connect objects with the network through communication technology, thereby realizing the intelligent network of human-machine interconnection and IoT interconnection. For example, a terminal device in an embodiment of the present application may be a wearable device. A wearable device, also known as a wearable smart device, is a general term for devices that apply wearable technology to intelligently design and develop wearable devices for daily wear, such as a glass, a glove, a watch, clothing, and shoes. A wearable device is a portable device that can be worn directly on the body or integrated into the user's clothing or accessories. A wearable device is not just a hardware device, but can also enable powerful functions through software support, data interaction, and cloud interaction. Generalized wearable smart devices include fully functional, large-sized devices that can enable complete or partial functions without relying on smartphones, such as smartwatches or smart glasses, as well as devices that only focus on a certain type of application function and need to be used in conjunction with other devices such as smartphones, such as smart bracelets and smart jewelry for physical sign monitoring.

As an example and not a limitation, in an embodiment of the present application, a terminal device may also be a terminal device in machine type communication (MTC). In addition, a terminal device can also be a vehicle module, a vehicle module assembly, a vehicle component, a vehicle chip, or a vehicle unit built into a vehicle as one or more components or units. The vehicle can implement the method provided by the present application through the built-in vehicle module, vehicle module assembly, vehicle component, vehicle chip, or vehicle unit and the like. Therefore, the embodiments of the present application can also be applied to the Internet of Vehicles, such as Vehicle to Everything (V2X), Long Term Evolution Vehicle (LTE-V) technology, Vehicle to Vehicle (V2V) technology, etc.

A network device involved in the present application can be a device that communicates with a terminal device, and the network device can also be referred to as an access network device or a wireless access network device. It can be a transmission reception point (TRP), an evolved NodeB (eNB or eNodeB) in an LTE system, a home base station (e.g., a home evolved NodeB or home Node B, HNB), a base band unit (BBU), or a wireless controller in a cloud radio access network (CRAN) scenario. Or, the network device can be a relay station, an access point, a vehicle mounted device, a wearable device, as well as a network device in 5G network or future evolved PLMN networks. It can also be an access point (AP) in WLAN, or a gNB in NR systems. The above network device can also be a metro base station, a micro base station, a pico base station, a femto base station, etc, which is not limited in the present application.In a type of network architecture, network devices may include centralized unit (CU) nodes, distributed unit (DU) nodes, RAN devices including CU nodes and DU nodes, or control plane CU nodes (CU-CP nodes) and user plane CU nodes (CU-UP nodes) as well as RAN devices of DU nodes.

A network device provides services to a cell, and a terminal device communicates with the cell through the transmission resources (e.g., frequency domain resources, or spectrum resources) allocated by the network device. The cell can belong to a macro base station (e.g., a macro eNB or macro gNB) or a base station corresponding to a small cell, which can include a metro cell, a micro cell, a pico cell, a femto cell, etc. These small cells have the characteristics of small coverage and low transmission power, and are suitable for providing high-speed data transmission services.A detailed illustration of the technical solution of the present application is provided below with specific embodiments. The following specific embodiments can be combined with each other, and the same or similar concepts or processes may not be repeated in some embodiments. In the description of the present application, each term should be broadly understood within this field, unless otherwise specified and limited. In the following, embodiments of the present application will be described in combination with the accompanying figures.

FIG. 2 is a schematic flowchart of a communication method provided by an embodiment of the present application, and the method comprises the following steps.

S201, measurement control information is received, the measurement control information including first indication information for indicating to a terminal device to include first timing advance information of candidate neighbor cells in a measurement report.

It can be understood that by including the first timing advance information of the candidate neighbor cells in the measurement report, base station scheduling can be performed in advance.

It should be noted that the base station scheduling in the present application includes but is not limited to: base station switching or dual connectivity scheduling.

In one implementation, the measurement control information is from a master node MN in dual connectivity DC.

In combination with the scenario example, base station switching refers to a switch from providing communication services to the terminal device from a source base station to providing communication services to the terminal device from a target base station. Dual connectivity scheduling refers to the establishment of connectivity between the terminal device and both primary node base station and secondary node base station simultaneously.

In this implementation, dual connectivity scheduling can provide better network coverage and capacity for the terminal device.

S202, the measurement report is sent, the measurement report including a number M of first timing advance information, each first timing advance information corresponding to one candidate neighbor cell and M being a positive integer.

Wherein, the first timing advance information is measured by the terminal device.

For example, in a scenario of switching base station as an example, the terminal device measures multiple first timing advance information of the terminal device in multiple candidate neighbor cells. Among the multiple candidate neighbor cells, only one candidate neighbor cell is a target neighbor cell for switching. The target neighbor cell is determined by selecting, and the process of selecting the target neighbor cell from the candidate neighbor cells is not performed at terminal device side. The multiple first timing advance information are sent to the source base station, and the target neighbor cell is selected according to the first timing advance information at base station side.

Optionally, M is less than or equal to a number of candidate neighbor cells.

In combination with the scenario example, the measurement control information indicates the candidate neighbor cells, and the terminal device measures the timing advance information of the candidate neighbor cells according to the measurement control information. Only one timing advance information is measured for each candidate neighbor cell. If there is no timing advance information measured for any candidate neighbor cell, then M is less than the number of candidate neighbor cells.

Optionally, the measurement report is sent via terminal device assistance information UAI.

In combination with the scenario example, UAI is configured to notify base station side of internal status of the terminal device, so that the base station side can schedule resources to match the specific status of the terminal device. A measurement report is sent by adding the measurement report in UAI.

Based on the above implementation, UAI is sent according to relevant protocols and specifications. Sending the measurement report via UAI can improve the accuracy and reliability of the sending of the measurement report.

Optionally, the first timing advance information includes at least one of the following parameters: a difference in service link propagation delay between a serving cell of the terminal device and a candidate neighbor cell of the terminal device, or timing advance TA of the terminal device in a candidate neighbor cell.

In combination with the scenario example, TA can be directly used for base station scheduling. The difference in service link propagation delay between the serving cell of the terminal device and the candidate neighbor cell of the terminal device is a difference between a propagation time on the service link between the terminal device and the serving cell and a propagation time on the service link between the terminal device and the candidate neighbor cell. The base station can calculate the TA using the difference in service link propagation delay.

Based on the above implementation, the first timing advance information is designed to include multiple types of parameters, and respective parameters can be selected for base station scheduling for different scenarios, which increases the application scope of the present application.

Next, a communication method at terminal device side will be illustrated with reference to FIG. 3.

FIG. 3 is a schematic diagram of a communication method at the terminal device side provided by an embodiment of the present application. As shown in FIG. 3, taking a source base station as an example, a terminal device receives measurement control information sent by the source base station, performs measurements based on the measurement control information to generate a measurement report, and sends the measurement report to the source base station. Wherein, the source base station can be replaced with a master node base station.

A communication method provided by the present application, comprises: receiving measurement control information, the measurement control information comprising first indication information for indicating to a terminal device to include first timing advance information of candidate neighbor cells in a measurement report; sending the measurement report including a number M of first timing advance information, each first timing advance information corresponding to one candidate neighbor cell; and M being a positive integer. In the above solution, the measurement report is sent by the terminal device before base station switching or secondary node addition, and the base station can perform base station scheduling at the time of a first uplink transmission after base station switching or secondary node addition according to the timing advance information in the measurement report, so that scheduling efficiency is improved and communication delay is reduced.

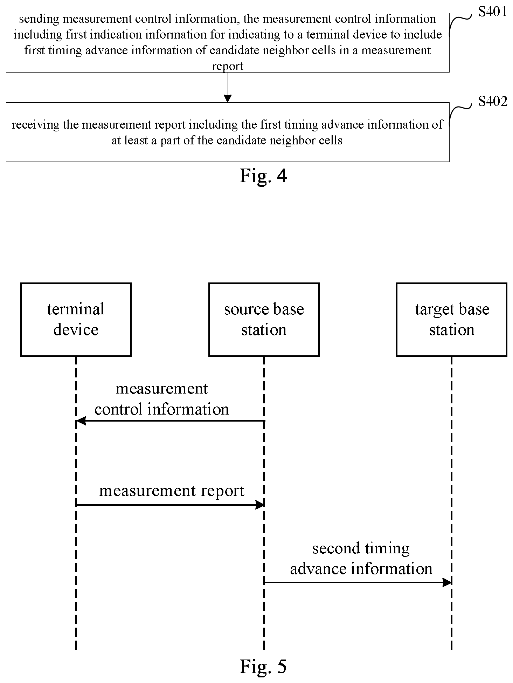

FIG. 4 is a schematic flowchart of a communication method provided by an embodiment of the present application. As shown in FIG. 4, the method comprises the following steps.

S401, measurement control information is sent, the measurement control information including first indication information for indicating to a terminal device to include first timing advance information of candidate neighbor cells in a measurement report.

As an example, this embodiment can be performed by a source base station, a master node base station, or a device with base station functionality. The base station is not limited in terms of its specific form, including but not limited to: a base station that provides 2G (2nd Generation Communication Technology) network services, 3G network services, 4G network services, 5G network services, wireless local area network services, or other network services.

S402, the measurement report is received, including the first timing advance information of at least a part of the candidate neighbor cells.

Optionally, the first timing advance information includes at least one of the following parameters: a difference in service link propagation delay between a serving cell of the terminal device and a candidate neighbor cell of the terminal device, or timing advance TA of the terminal device in a candidate neighbor cell.

In one implementation, a target cell for the terminal device is a cell in a secondary node SN in dual connectivity DC.

Wherein, for the scenario of switching base station, a target cell is a base station in a target base station. For dual connectivity scenario, a target cell is a cell within coverage area of a secondary node base station.

In one implementation, the communication method further comprises sending second timing advance information.

Wherein, the second timing advance information is sent to the target base station or the secondary node base station.

In combination with the scenario example, second timing advance information is sent to the target base station to switch the base station providing communication services as the target base station. The second timing advance information is sent to the secondary node base station to establish dual connectivity between the secondary node base station and the master node base station.

Next, a communication method at base station side will be illustrated with reference to FIG. 5.

FIG. 5 is a schematic diagram of a communication method at the base station side provided by an embodiment of the present application. As shown in FIG. 5, taking a source base station as an example, the source base station sends measurement control information to a terminal device, receives a measurement report sent by the terminal device, and sends second timing advance information to a target base station.

Further, in one implementation, the second timing advance information is carried by a request message for secondary node SN addition in dual connectivity DC.

In combination with the scenario example, the request message for secondary node addition is configured to establish network extension between a master node and the secondary node. The request message for secondary node addition contains identification information and connection parameters of the secondary node. The request message for secondary node addition enables accurate location of the secondary node, and the sending of the second timing advance information.

Based on the above implementation, the second timing advance information is configured to establish dual connectivity. The request message for secondary node addition facilitates the reliability of sending the second timing advance information, thereby enhancing the reliability of dual connectivity establishment.

In one implementation, the sending second timing advance information includes sending at least one of the following parameters: a difference in service link propagation delay between a serving cell of a terminal device and a target cell of the terminal device, timing advance TA of the terminal device in the serving cell, or timing advance TA of the terminal device in the target cell.

Wherein, the serving cell refers to a cell within the coverage area of a source base station that currently provides communication services to the terminal device.

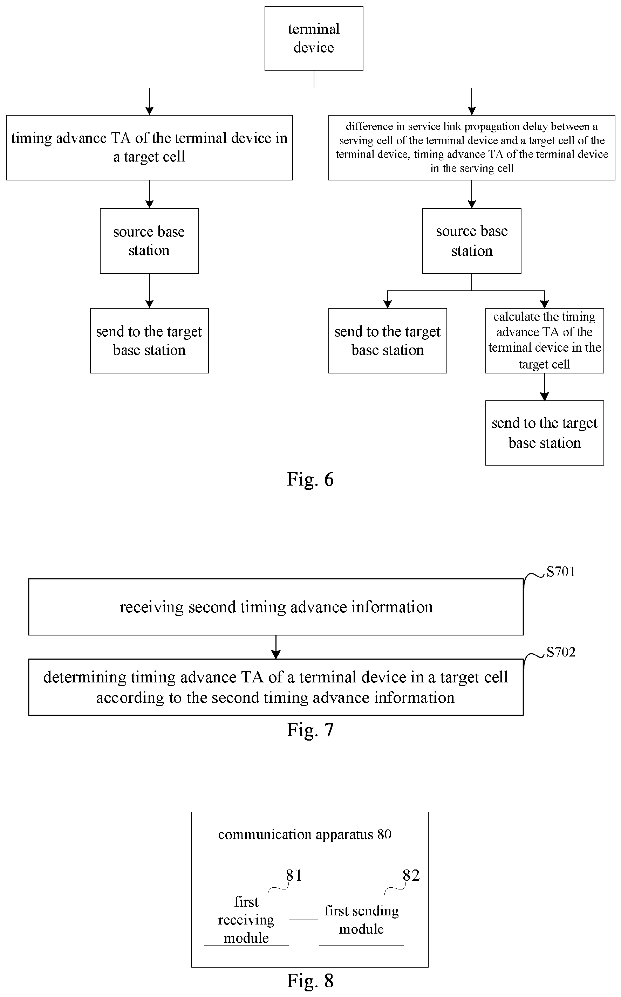

Next, the sending of the second timing advance information will be illustrated in conjunction with FIG. 6.

FIG. 6 is a schematic diagram of sending second timing advance information provided by an embodiment of the present application. As shown in FIG. 6, a terminal device sends timing advance TA of the terminal device in a target cell to a source base station, and the source base station sends the timing advance TA of the terminal device in the target cell to a target base station. The terminal device sends a difference in service link propagation delay between a serving cell of the terminal device and a target cell of the terminal device and timing advance TA of the terminal device in the serving cell to the source base station. The source base station has two ways of processing the information. A first way is that the source base station directly sends the information to the target base station, and the target base station calculates the timing advance TA of the terminal device in the target cell based on the data. A second way is that the source base station calculates the timing advance TA of the terminal device in the target cell based on the data and sends the calculation result to the target base station.

In this implementation, a corresponding processing method may be employed based on the specific type of the second information to adapt to different scenarios.

FIG. 7 is a schematic flowchart of a communication method provided by an embodiment of the present application. As shown in FIG. 7, the method comprises the following steps.

S701, second timing advance information is received.

As an example, this embodiment can be performed by a target base station, a secondary node base station, or a device with base station functionality, and the base station is not limited in terms of its specific form.

Optionally, the second timing advance information sent by the source base station or a primary base station is received.

S702, timing advance TA of a terminal device in a target cell is determined according to the second timing advance information.

In one implementation, the second timing advance information includes at least one of the following parameters: a difference in service link propagation delay between a serving cell of a terminal device and a target cell of the terminal device, timing advance TA of the terminal device in the serving cell, or timing advance TA of the terminal device in the target cell.

In one implementation, the target cell is a cell in a secondary node SN in dual connectivity DC.

Optionally, if the second timing advance information includes the timing advance TA of the terminal device in the target cell, then the timing advance TA of the terminal device in the target cell is obtained from the second timing advance information. If the second timing advance information includes the difference in service link propagation delay between the serving cell of the terminal device and the target cell of the terminal device and the timing advance TA of the terminal device in the serving cell, then the timing advance TA of the terminal device in the target cell is calculated according to this data.

FIG. 8 is a schematic structural diagram of a communication apparatus provided by an embodiment of the present application. As shown in FIG. 8, the communication apparatus 80 may include a first receiving module 81 and a first sending module 82, wherein,
the first receiving module 81 is configured for receiving measurement control information, the measurement control information including first indication information for indicating to a terminal device to include first timing advance information of candidate neighbor cells in a measurement report.

The first sending module 82 is configured for sending the measurement report including a number M of first timing advance information, each first timing advance information corresponding to one candidate neighbor cell; and M being a positive integer.

Optionally, the first receiving module 81 can execute S201 in the embodiment of FIG. 2.

Optionally, the first sending module 82 can execute S202 in the embodiment of FIG. 2.

It should be noted that the communication apparatus shown in the embodiments of the present application can execute the technical solution shown in the above method embodiments, and the implementation principle and beneficial effects are similar, which will not be repeated here.

In one implementation, the measurement control information is from a master node MN in dual connectivity DC.

In one implementation, the first sending module 82 is specifically configured for sending the measurement report via terminal device assistance information UAI.

In one implementation, the first timing advance information includes at least one of the following parameters: a difference in service link propagation delay between a serving cell of the terminal device and the candidate neighbor cell of the terminal device, or timing advance TA of the terminal device in the candidate neighbor cell.

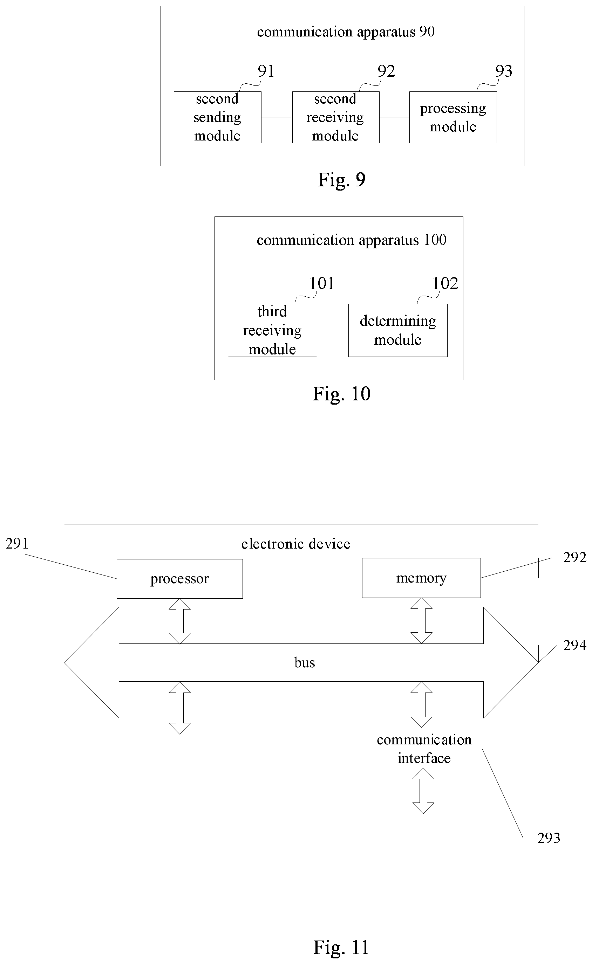

FIG. 9 is a schematic structural diagram of a communication apparatus provided by an embodiment of the present application. As shown in FIG. 9, the communication apparatus 90 may include a second sending module 91, a second receiving module 92 and a processing module 93, wherein,
the second sending module 91 is configured for sending measurement control information, the measurement control information including first indication information for indicating to a terminal device to include first timing advance information of candidate neighbor cells in a measurement report.

The second receiving module 92 is configured for receiving the measurement report including the first timing advance information of at least a part of the candidate neighbor cells.

Optionally, the second sending module 91 can execute S401 in the embodiment of FIG. 4.

Optionally, the second receiving module 92 can execute S402 in the embodiment of FIG. 4.

In one implementation, the first timing advance information includes at least one of the following parameters: a difference in service link propagation delay between a serving cell of the terminal device and the candidate neighbor cell of the terminal device, or timing advance TA of the terminal device in the candidate neighbor cell.

The processing module 93 is configured for sending second timing advance information.

In one implementation, the second timing advance information is carried by a request message for secondary node SN addition in dual connectivity DC.

In one implementation, the processing module 93 is specifically configured for sending at least one of the following parameters: a difference in service link propagation delay between a serving cell of the terminal device and a target cell of the terminal device, timing advance TA of the terminal device in the serving cell, or timing advance TA of the terminal device in the target cell.

In one implementation, the target cell of the terminal device is a cell in a secondary node SN in dual connectivity DC.

FIG. 10 is a schematic structural diagram of a communication apparatus provided by an embodiment of the present application. As shown in FIG. 10, the communication apparatus 100 may include a third receiving module 101 and a determining module 102, wherein,
the third receiving module 101 is configured for receiving second timing advance information.

The determining module 102 is configured for determining timing advance TA of a terminal device in a target cell according to the second timing advance information.

Optionally, the third receiving module 101 can execute S701 in the embodiment of FIG. 7.

Optionally, the determining module 102 can execute S702 in the embodiment of FIG. 7.

In one implementation, the second timing advance information includes at least one of the following parameters: a difference in service link propagation delay between a serving cell of the terminal device and the target cell of the terminal device, timing advance TA of the terminal device in the serving cell, or timing advance TA of the terminal device in the target cell.

In one implementation, the target cell is a cell in a secondary node SN in dual connectivity DC.

FIG. 11 is a schematic structural diagram of an electronic device provided by an embodiment of the present application. As shown in FIG. 11, the electronic device comprises:
a processor 291, the electronic device also includes a memory 292; It can also include a communication interface 293 and a bus 294. Wherein, the processor 291, the memory 292, and the communication interface 293 can communicate with each other through the bus 294. The communication interface 293 can be configured for information transmission. The processor 291 can call logical instructions in the memory 292 to perform the methods of the above embodiments.

In addition, the logical instructions in the aforementioned memory 292 can be implemented in the form of software functional units and can be stored in a computer-readable storage medium when sold or used as an independent product.

The memory 292, as a computer-readable storage medium, can be configured to store software programs, computer executable programs, such as program instructions/modules corresponding to the methods in the embodiments of the present application. The processor 291 executes functional applications and data processing by running software programs, instructions, and modules stored in the memory 292, thereby implementing the methods described in the above method embodiments.

The memory 292 may include a program storage area and a data storage area, wherein the program storage area may store an operating system and application programs required for at least one function, and the data storage area can store data created in the usage of a terminal device. In addition, the memory 292 may include a high-speed random access memory and may also include a non-volatile memory.

An embodiment of the present application provides a non-transitory computer-readable storage medium storing computer-executable instructions, which implement the methods of the aforementioned embodiments when being executed by a processor.

An embodiment of the present application also provides a computer program product including a computer program stored in a computer-readable storage medium. At least one processor can read the computer program from the computer-readable storage medium, and implement the technical solution of the communication methods in the above embodiments when executing the computer program.

An embodiment of the present application also provides a chip for executing instructions, the chip having a computer program stored thereon, and when the computer program is executed by the chip, the above-mentioned communication methods are implemented.

Those skilled in the art will readily conceive other embodiments of the present application after considering the specification and practicing the invention disclosed herein. The present application is intended to cover any variations, uses, or adaptive changes of the present application, which follow the general principles of the present application and include common knowledge or commonly used technical means in the art not disclosed in the present application. The specification and embodiments are only considered exemplary, and the true scope and spirit of the present application are indicated by the following claims.

It should be noted that the user information (including but not limited to user device information, user personal information, etc.) and data (including but not limited to data used for analysis, stored data, displayed data, etc.) involved in the present application are all information and data authorized by the user or fully authorized by all parties, and the collection, use, and processing of relevant data must comply with relevant laws, regulations, and standards of relevant countries and regions, and corresponding operation interfaces are provided for users to accept or refuse authorization.

It should be understood that the present application is not limited to the precise structure described above and shown in the accompanying figures, and various modifications and changes can be made without departing from its scope. The scope of the present application is limited only by the appended claims.

## Claims

1. A communication method, **characterized in that**, the communication method comprises:
receiving measurement control information, the measurement control information including first indication information for indicating to a terminal device to include first timing advance information of candidate neighbor cells in a measurement report;
sending the measurement report, the measurement report including a number M of first timing advance information, each first timing advance information corresponding to one candidate neighbor cell, and M being a positive integer.

2. The method according to claim 1, **characterized in that**, the measurement control information is from a master node MN in dual connectivity DC.

3. The method according to claim 1, **characterized in that**, the sending the measurement report comprises:
sending the measurement report via terminal device assistance information UAI.

4. The method according to claim 1, **characterized in that**, the first timing advance information includes at least one of the following parameters:
a difference in service link propagation delay between a serving cell of the terminal device and the candidate neighbor cell of the terminal device, or timing advance TA of the terminal device in the candidate neighbor cell.

5. A communication method, **characterized in that**, the communication method comprises:
sending measurement control information, the measurement control information including first indication information for indicating to a terminal device to include first timing advance information of candidate neighbor cells in a measurement report;
receiving the measurement report, the measurement report including the first timing advance information of at least a part of the candidate neighbor cells.

6. The method according to claim 5, **characterized in that**, the first timing advance information includes at least one of the following parameters:
a difference in service link propagation delay between a serving cell of the terminal device and the candidate neighbor cell of the terminal device, or timing advance TA of the terminal device in the candidate neighbor cell.

7. The method according to claim 5, **characterized in that**, the method further comprises:
sending second timing advance information.

8. The method according to claim 7, **characterized in that**, the second timing advance information is carried by a request message for secondary node SN addition in dual connectivity DC.

9. The method according to claim 5, **characterized in that**, the sending second timing advance information comprises:
sending at least one of the following parameters: a difference in service link propagation delay between a serving cell of the terminal device and a target cell of the terminal device, timing advance TA of the terminal device in the serving cell, or timing advance TA of the terminal device in the target cell.

10. The method according to claim 5, **characterized in that**, a target cell of the terminal device is a cell in a secondary node SN in dual connectivity DC.

11. A communication method, **characterized in that**, the communication method comprises:
receiving second timing advance information;
determining timing advance TA of a terminal device in a target cell according to the second timing advance information.

12. The method according to claim 11, **characterized in that**, the second timing advance information includes at least one of the following parameters:
a difference in service link propagation delay between a serving cell of the terminal device and the target cell of the terminal device, timing advance TA of the terminal device in the serving cell, or timing advance TA of the terminal device in the target cell.

13. The method according to claim 11, **characterized in that**, the target cell of the terminal device is a cell in a secondary node SN in dual connectivity DC.

14. A communication apparatus, **characterized in that**, the communication apparatus comprises:
a first receiving module configured for receiving measurement control information, the measurement control information including first indication information for indicating to a terminal device to include first timing advance information of candidate neighbor cells in a measurement report;
a first sending module configured for sending the measurement report, the measurement report including a number M of first timing advance information, each first timing advance information corresponding to one candidate neighbor cell, and M being a positive integer.

15. A communication apparatus, **characterized in that**, the communication apparatus comprises:
a second sending module configured for sending measurement control information, the measurement control information including first indication information for indicating to a terminal device to include first timing advance information of candidate neighbor cells in a measurement report;
a second receiving module configured for receiving the measurement report, the measurement report including the first timing advance information of at least a part of the candidate neighbor cells.

16. A communication apparatus, **characterized in that**, the communication apparatus comprises:
a third receiving module configured for receiving second timing advance information;
a determining module configured for determining timing advance TA of a terminal device in a target cell according to the second timing advance information.

17. An electronic device, **characterized in that**, the electronic device comprises: a processor, and a memory communicatively connected with the processor;
the memory storing computer-executable instructions;
the computer-executable instructions stored in the memory being executed by the processor to implement the method according to any one of claims 1-13.

18. A computer-readable storage medium, **characterized in that**, the computer-readable storage medium has computer-readable instructions stored therein, the computer-readable instructions, when being executed by a processor, implementing the method according to any one of claims 1-13.

19. A computer program product, **characterized in that**, the computer program product comprises a computer program that, when being executed by a processor, implements the method according to any one of claims 1-13.
